# EUROPÄISCHE PATENTSCHRIFT

(11) **EP 1 111 537 B1**
(45) Veröffentlichungstag und Bekanntmachung des Hinweises auf die Patenterteilung: **16.02.2005**
(21) Anmeldenummer: 99125922.7
(22) Anmeldetag: 23.12.1999
(51) Int. Cl.: G06K 19/077

(54) **Ringförmiger Datenmobilspeicher mit Koppelspule**
Annular mobile data memory with coupling coil
Mémoire mobile de données de forme annulaire avec bobine de couplage

(30) Priorität: 30.11.1999 DE 19957647
(43) Veröffentlichungstag der Anmeldung: 27.06.2001
(73) Patentinhaber: SIEMENS AKTIENGESELLSCHAFT, 80333 München (DE)
(72) Erfinder: Themel, Helmut, Dipl.-Ing., 91096 Möhrendorf (DE)

(56) Entgegenhaltungen:
- EP-A- 0 782 733
- WO-A-93/12513
- GB-A- 2 288 103

## Beschreibung

Aus der EP 0 617 826 B1 ist eine Sicherheitsschließvorrichtung bekannt, wobei die Unversehrtheit dieser Verschließeinrichtung durch elektronische Mittel kontrolliert werden kann. Die Sicherheitsverschließeinrichtung weist auf einem flächigen Träger eine Spule zur Datenübertragung mit einer Sende-/Empfangsvorrichtung. Ein elektronischer Sicherheitsschaltkreis ist über mindestens einen Verbindungsdraht verbunden, wobei die Entsiegelung der genannten Vorrichtung eine Unterbrechung des Durchganges durch mechanische Wirkung mindestens eines Teils des genannten elektronischen Sicherheitsschaltkreises bewirkt.

Aus GB 2 288 103 A ist ein magnetisch gekoppelter Transponder mit einer Ringspule bekannt. Der Transponder ist zur Kennzeichnung insbesondere von Gasflaschen ausgebildet.

Aus WO 93/12513 ist eine bandförmige Sicherheits-Verschließeinrichtung bekannt, d.h. ein Siegel, welche um einen-zu sichernden Gegenstand greift und wobei dann die beiden Enden des Siegels zu einer Schlaufe verklebt werden. Bei Beschädigung des Bandes reißen eine oder mehrere Zuleitungen zu einer Feindrahtwiddung ab. Die Feindrahtwicklung dient der Abfrage eines kodierbaren elektronischeh Bauelementes auf induktiv gekoppeltem Wege. Ist eine Abfrage des kodierbaren Bauelements nicht möglich, ist das ein Hinweis auf eine unbefugte Beschädigung des Siegels. Die Feindrahtwicklung nimmt dabei auch nur einen geringen Teil der Bandfläche ein, so dass eine Abfrage nur an einer bestimmten Stelle des Siegelbandes möglich ist.

Aus der EP 0 782 733 B1 ist eine Vorrichtung zur berührungslosen Energie- und Datenübertragung auf induktivem Wege bekannt, welche besonders geeignet ist zur Identifikation von Gasflaschen. Diese weist einen Datenmobilspeicher auf, welcher eine Speicher- und Betriebsschaltung und eine daran angeschlossene langgestreckte Schlaufenspule enthält. Diese Elemente des Datenmobilspeichers sind auf einem bandförmigen, bevorzugt elastischem Träger aufgebracht. Über ein Schreibund Lesegerät, welches eine Antennenspule enthält, können Daten vom Datenmobilspeicher gelesen bzw. in diesen geschrieben werden. Der bandförmige Träger kann insbesondere ringförmig nahezu vollständig umschließend z.B. um den Hals einer Gasflasche gelegt werden. Hiermit ist eine Identifikation einer Vielzahl von Gasflaschen möglich.

Diese Anordnung weist den Nachteil auf, dass eine berührungslose Datenkommunikation zwischen dem Schreib- und Lesegerät und dem Datenmobilspeicher auf dem bandförmigen Träger nicht gleichmäßig von allen Raumrichtungen aus möglich ist. Wird vielmehr das Schreib- und Lesegerät von einer Raumrichtung aus an einen um den Hals einer Gasflasche gelegten bandförmigen Träger angenähert, welche gerade auf den Verschluss des bandförmigen Trägers zeigt, so ist ein Datenaustausch unter diesem Winkel nicht oder nur unzuverlässig möglich, da an dieser Verbindungsstelle der bandförmige Träger nicht mit einem Teil der langgestreckten Schlaufenspule belegt ist.

Der Erfindung liegt die Aufgabe zugrunde, eine Koppelspule und einen damit ausgerüsteten ringförmigen Datenmobilspeicher anzugeben, bei denen dieses Problem nicht auftritt.

Die Aufgabe wird gelöst durch den in Anspruch 1 angegebenen ringförmigen Datenspeicher. Der unabhängige Anspruch 1 ist gegen das Dokument EP 0 782 733 B1 abgegrenzt.

Die Erfindung wird an Hand der nachfolgend kurz angegebenen Figuren näher erläutert. Dabei zeigt
- Figur 1:: einen beispielhaften inneren Aufbau für einen Datenmobilspeicher mit einer Koppelspule gemäß der Erfindung,
- Figur 2:: den beispielhaften Datenmobilspeicher von Figur 1, wobei dessen Koppelspule zum Zwecke der besseren Erläuterbarkeit von deren Aufbau in einer auseinander gezogenen Weise dargestellt ist,
- Figur 3:: den beispielhaften Datenmobilspeicher von Figur 1 und ein prinzipielles elektrisches Blockschaltbild einer Schreib- und/oder Leseeinrichtung,
- Figur 4:: eine Draufsicht auf einen ausschnittsweise dargestellten Stoßbereich der beispielhaften Ausführungsform für eine erfindungsgemäße Koppelspule gemäß den Darstellungen von Figur 1 und 2,
- Figur 5:: den Verlauf der magnetischen Flussdichte insbesondere in dem in Figur 4 dargestellten Stoßbereich der beispielhaften Koppelspule von Figur 1.
- Figur 6:: eine perspektivische Draufsicht auf eine beispiel hafte Ausführung einer Schreib- und/oder Leseeinrichtung für einen Datenmobilspeicher in Form eines Handgeräts, welches an eine elektronische Programmiereinheit angeschlossen ist, und
- Figur 7:: eine perspektivische Frontansicht einer Gasflasche, welche mit einem erfindungsgemäßen Datenmobilspeicher zur Erfassung und / oder Verarbeitung von gasflaschenspezifischen Daten ausgerüstet ist,

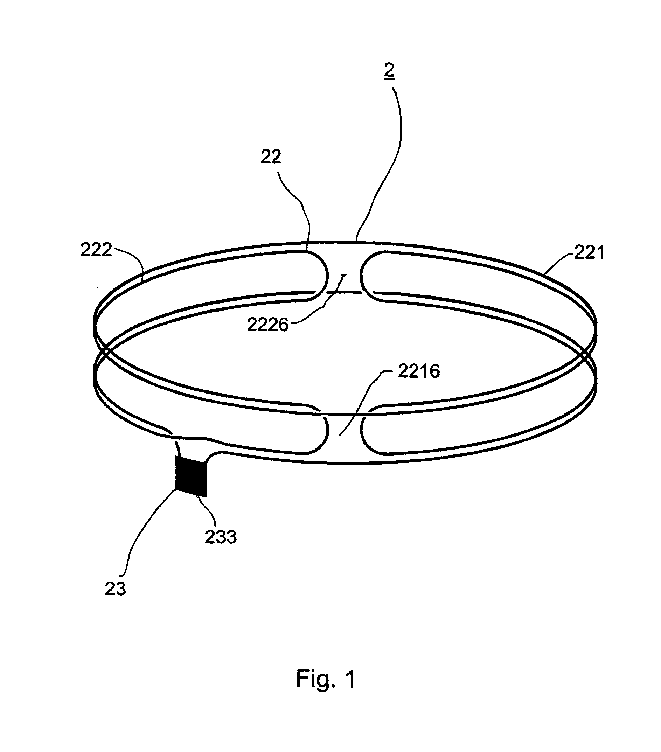

Figur 1 zeigt beispielhaft den inneren Aufbau einer bevorzugten Ausführungsform einer Koppelspule 22 gemäß der Erfindung. Diese Koppelspule 22 weist beispielhaft zwei zylindrische Schlaufenspulen 221 bzw. 222 auf, die in Reihe geschaltet sind. Jede Schlaufenspule verfügt über jeweils eine Wicklung. Auf dem Umfang der Wicklung einer jeden Schlaufenspule 221 bzw. 222 tritt jeweils ein Stoßbereich 2216 bzw. 2226 auf. Dieser wird durch die Rückführungen der jeweiligen Schlaufenleiter bis zum Beginn der jeweiligen Wicklung verursacht. Erfindungsgemäß sind die Schlaufenspulen 221 und 222 räumlich so ineinander liegend angeordnet, dass die Stoßbereiche 2216 und 2226 sich nicht überlappen, d.h. nicht übereinander liegen.

Vorteilhaft sind die zylindrischen Schlaufenspulen der Koppelspule räumlich so ineinander liegend angeordnet, dass die Stoßbereiche auf dem Umfang der Wicklungen möglichst gleichmäßig verteilt sind. Bei der in Figur 1 beispielhaft gezeigten Koppelspule 22 sind deren zwei zylindrische Schlaufenspulen 221 bzw. 222 räumlich so ineinander liegend angeordnet, dass die Stoßbereiche 2216 bzw. 2226 auf dem Umfang der Wicklungen annähernd um 180 Grad versetzt, d.h. gegenüber liegend, angeordnet sind.

Bei anderen, nicht dargestellten Ausführungen kann die Koppelspule auch aus mehr als zwei in Reihe geschalteten zylindrischen Schlaufenspuleen bestehen. Eine solche Anordnung ist dann von Vorteil, wenn die Koppelspule eine größere Anzahl an Windungen aufweisen soll. Vorteilhaft sind auch dann die zylindrischen Schlaufenspulen der Koppelspule räumlich so ineinander liegend angeordnet, dass die Stoßbereiche auf dem Umfang der Wicklungen möglichst gleichmäßig verteilt sind. Bei einer Koppelspule mit beispielhaft drei Schlaufenspulen würden diese dann vorteilhaft räumlich so ineinander liegend angeordnet, dass deren Stoßbereiche auf dem Umfang der Wicklungen annähernd um 120 Grad versetzt liegen.

Die erfindungsgemäße Ausführung der Koppelspule bietet den besonderen Vorteil, dass sie nahezu gleichmäßig in alle Raumrichtungen wirken kann, d.h. in einer 360 Grad Ebene. So stellt zwar der Stoßbereich einer jeden Schlaufenspule einen Bereich dar, bei dem quasi kein Senden bzw. Empfang über ein magnetisches Feld möglich ist. Da die Stoßbereiche der ineinander liegenden Schlaufenspulen über dem Umfang der Koppelspule aber zumindest nicht überlappend, bevorzugt gleichmäßig verteilt, angeordnet sind, tritt an den Stoßstellen keine Nullstelle der magnetischen Flussdichte auf.

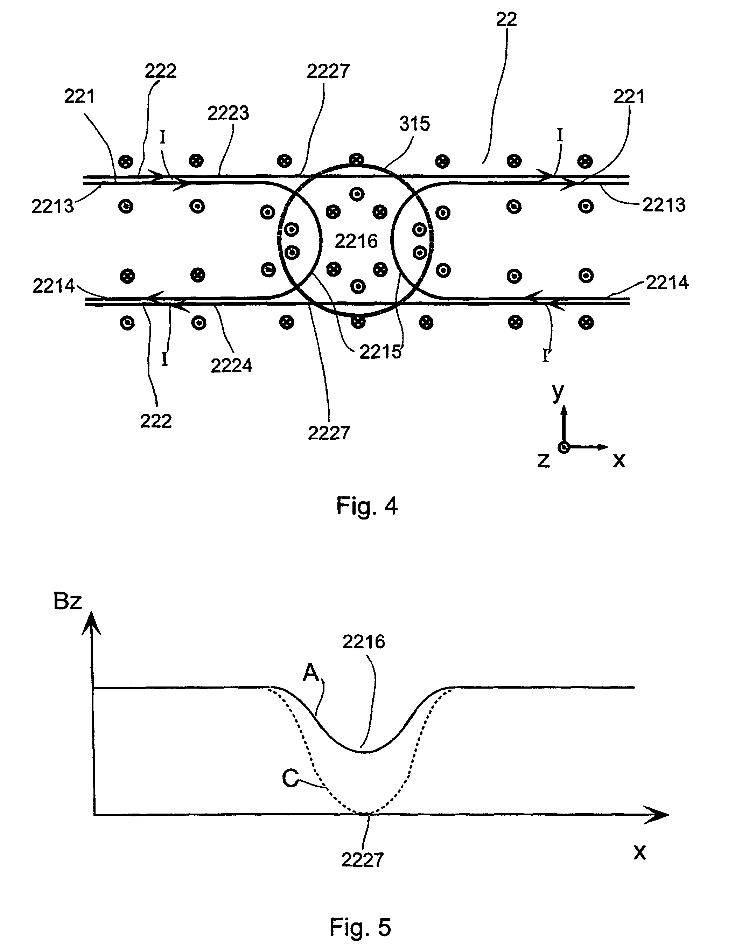

Die erfindungsgemäße Ausführung der Koppelspule bietet den besonderen Vorteil, dass in einem Schreib- und/oder Leseeinrichtung integrierte Übertragungsspule möglichst klein ausgeführt werden kann. Dadurch wird die Handhabung eines z.B. in Form eines Handgeräts ausgeführten Schreib- und/oder Leseeinrichtung erheblich erleichtert. Dies wird nachfolgend am Beispiel der Figuren 4 bis 7 noch näher erläutert werden.

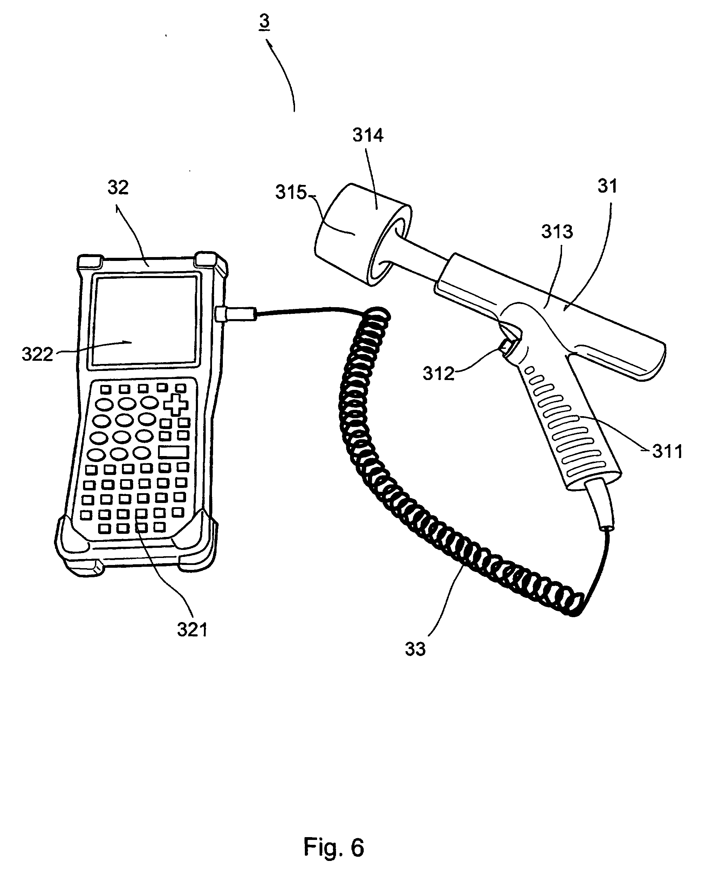

Vorteilhaft ist im Beispiel der Figur 1 bereits eine Datenverarbeitungseinheit 23 mit integrierten Datenspeichermittel 233 an die Koppelspule 22 angeschlossen. Die Gesamtanordnung stellt dann einen berührungslos les- und / oder beschreibbaren Datenmobilspeicher 2 dar. Diese ermöglicht eine berührungslose Übertragung und/oder einen berührungslosen Empfang von Daten mittels einer Schreib- und/oder Leseeinrichtung auf induktivem Wege. Ein Beispiel für eine derartige Schreib und/oder Leseeinrichtung wird mittel Figur 6 noch näher erläutert werden.

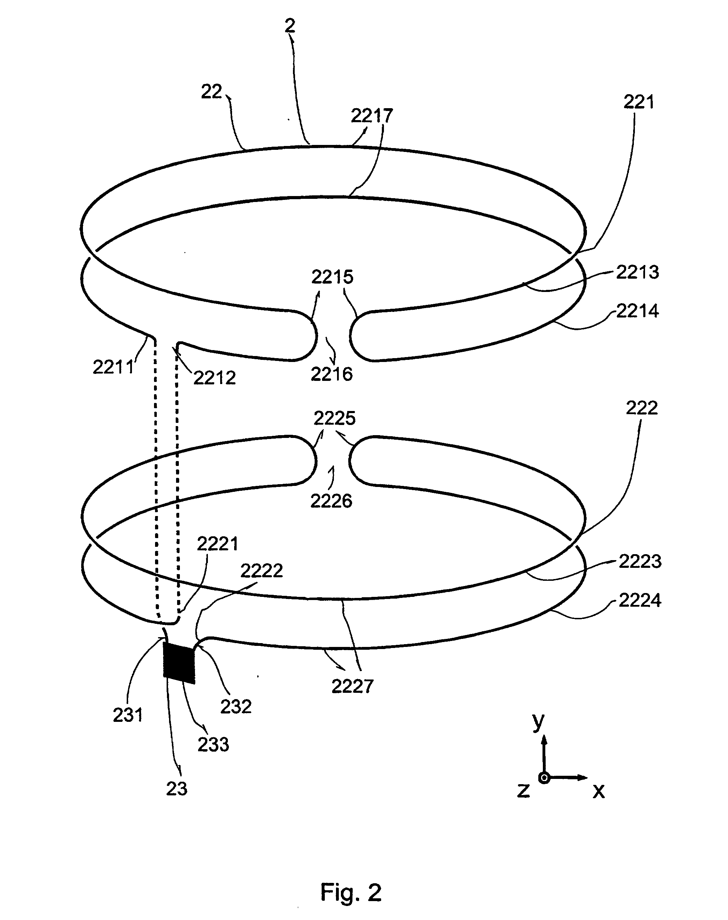

Figur 2 zeigt den beispielhaften Datenmobilspeicher 2 von Figur 1, wobei dessen Koppelspule 22 zum Zwecke der besseren Erläuterbarkeit von deren Aufbau in einer auseinander gezogenen Weise dargestellt ist, Dabei ist die erste zylindrische Schlaufenspulen 221 im oberen und die zweite zylindrische Schlaufenspulen 222 im unteren Zeichnungsbereich platziert. Die Wicklung der ersten zylindrischen Schlaufenspulen 221 weist dabei einen ersten und einen zweiten Schlaufenleiter 2213 und 2214 auf. Die Verbindungen 2215 der Schlaufenleiter 2213 und 2214 bilden dabei den Stoßbereich 2216, während an den anderen Enden der Schlaufenleiter ein erster und ein zweiter Schlaufenanschluss 2211 und 2212 vorliegen. Entsprechend weist die Wicklung der zweiten zylindrischen Schlaufenspulen 222 einen dritten und einen vierten Schlaufenleiter 2223 und 2224 auf. Die Verbindungen 2225 der Schlaufenleiter 2223 und 2224 bilden wiederum den Stoßbereich 2226, während an den anderen Enden der Schlaufenleiter ein dritten und ein vierten Schlaufenanschluss 2221,2222 vorliegen. Die Reihenschaltung der Schlaufenspulen 221 und 222 erfolgt durch entsprechende Verbindungen der Schlaufenanschlüsse 2211,2212 mit den Schlaufenanschlüssen 2221, 2222, die im Beispiel der Figur 2 auf Grund der zeichentechnisch gestreckten Anordnung strichliert dargestellt sind.

Auf Grund der erfindungsgemäßen räumlich ineinander liegenden Anordnung kommt der Stoßbereich 2226 der zweiten Schlaufenspule 222 bei einem Bereich 2217 der ersten zylindrischen Schlaufenspule 221 zu liegen, bei dem deren Schlaufenleiter 2213,2214 unterbrechungsfrei und geradlinig verlaufen. Die übertragungstechnische Bruchstelle des Stoßbereiches 2226 wird somit durch die ungestörten Schlaufenleiter 2213,2214 überdeckt. In entsprechender Weise kommt einem bei ineinander Liegen der Stoßbereich 2216 der ersten Schlaufenspule 221 bei einem Bereich 2227 der zweiten zylindrischen Schlaufenspule 222 zu liegen, bei dem deren Schlaufenleiter 2223,2224 unterbrechungsfrei und geradlinig verlaufen. Die übertragungstechnische Bruchstelle des Stoßbereiches 2216 wird somit auch an dieser Stelle durch die ungestörten Schlaufenleiter 2223,2224 überdeckt.

Im Beispiel der Figur 2 ist schließlich eine Datenverarbeitungseinheit 23, welche integrierte Datenspeichermittel 233 aufweist, über deren ersten und zweiten Anschlusspunkt 231 bzw. 233 einerseits mit dem ersten Schlaufenanschluss 2211 der ersten Schlaufenspule 221, und andererseits mit dem vierten Schlaufenanschluss 2222 der zweiten Schlaufenspule 222 verbunden. Durch die Verbindung der Koppelspule 22 und der Datenverarbeitungseinheit 23 entsteht ein Datenmobilspeicher 2, der auf induktive Weise mittels einer Schreib- und/oder Leseeinrichtung mit Daten beschrieben werden kann, bzw. von dem Daten abgerufen werden können.

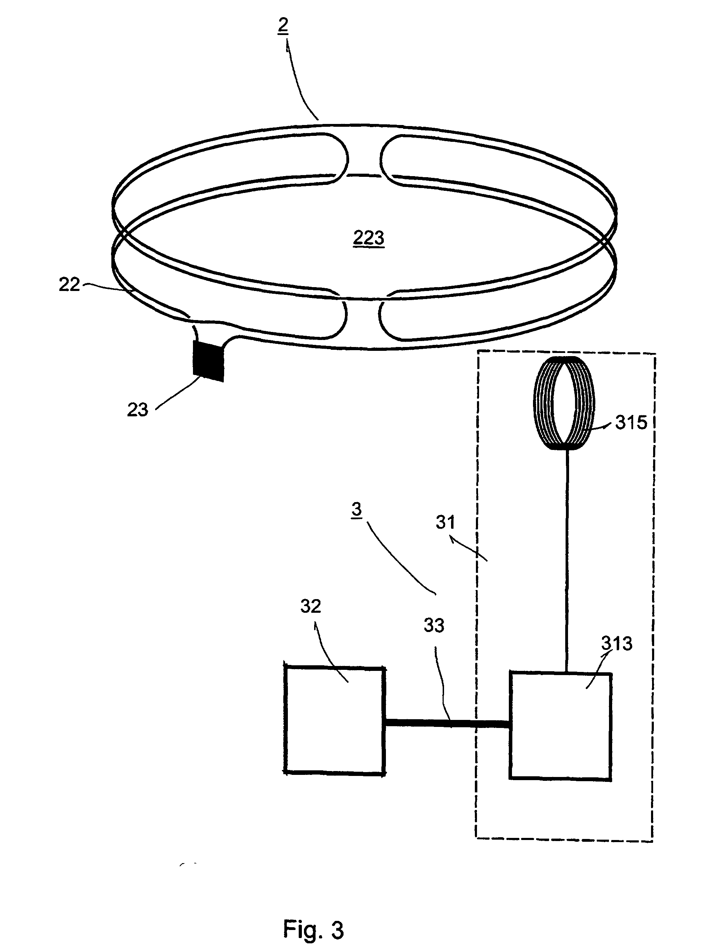

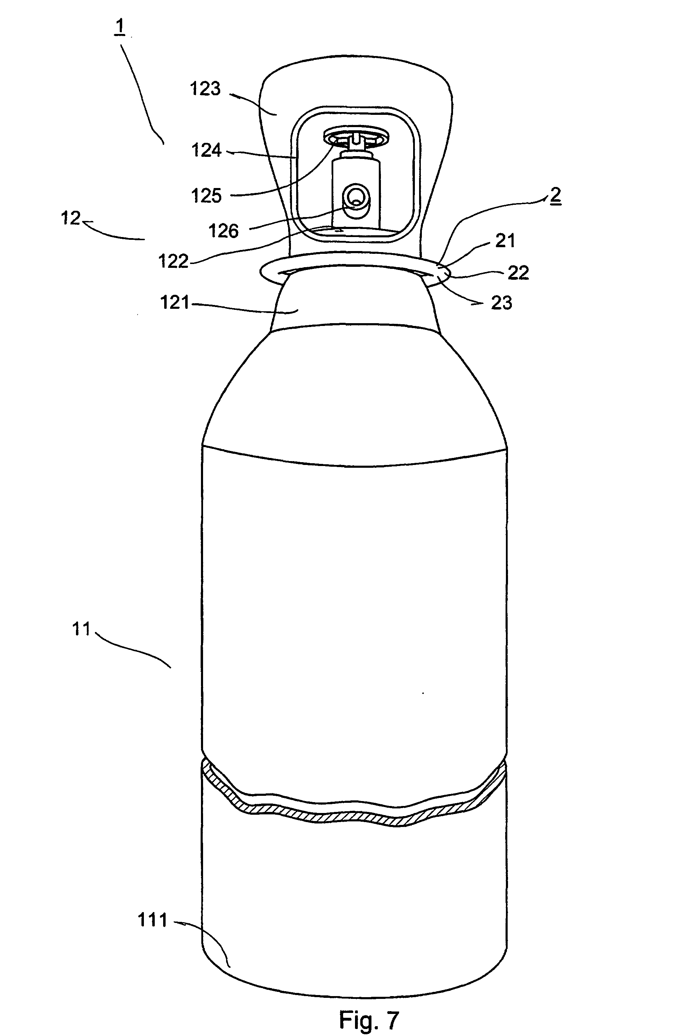

Figur 3 zeigt wiederum den beispielhaften Datenmobilspeicher von Figur 1 und ein prinzipielles elektrisches Blockschaltbild einer entsprechenden Schreib- und/oder Leseeinrichtung 3. Der freie Raum 223 im Inneren der zylindrischen Schlaufenspulen der Koppelspule 22 kann dabei zu Montagezwecken genutzt werden. Dies wird am Beispiel der Figur 7 noch näher erläutert werden.

Die Schreib- und/oder Leseeinrichtung 3 enthält ein bevorzugt von einer Bedienperson handhabbares Handgerät 31, welches im wesentlichen eine im Gerätekörper integrierte Steuereinrichtung 313 und eine Übertragungsspule 315 an deren Kopfende aufweist. Das Handgerät kann von einer Bedienperson insbesondere mit nach vorne gerichteter Übertragungsspule 315 in die räumliche Nähe der Koppelspule 22 des Datenmobilspeicher 2 gebracht werden. Es ist dann ein Datenaustausch zwischen Handgerät und Datenverarbeitungseinheit 23 auf induktivem Wege über die Übertragungsspule 315 und die Koppelspule 22 möglich. Auf Grund der erfindungsgemäßen Gestaltung insbesondere der Koppelspule 22 ist es besonders vorteilhaft möglich, die Übertragungsspule 315 des Handgeräts 3 klein auszuführen. Hierdurch wird die Handhabung des Handgeräts erheblich erleichtert. Dies wird nachfolgend noch näher erläutert werden.

Vorteilhaft kann an die integrierte Steuereinrichtung 313 eine externe elektronische Programmiereinheit 32 über ein Datenkoppelkabel 33 angeschlossen sein. Über diese können einerseits Daten, welche an den Datenmobilspeicher 2 übergeben werden sollen, vorgegeben werden. Ferner ermöglicht die Programmiereinheit 32 eine Weiterverarbeitung von Daten, welche vom Datenmobilspeicher 2 gelesen wurden.

Figur 4 zeigt eine Draufsicht auf einen Ausschnitt der beispielhaften Koppelspule 22 gemäß den Darstellungen von Figur 1 bis 3 im Bereich des Stoßbereiches 2216. Dabei sind links und rechts die innenliegenden Schlaufenleiter 2213,2214 der ersten Schlaufenspule 221 ausschnittsweise dargestellt. Durch die Verbindungen 2215 sind die Schlaufenleiter 2213,2214 zu der Wicklung der Schlaufenspule 221 zusammengeschaltet. Die Verbindungen 2215 sind Ursache für den Stoßbereich 2216. Des weiteren sind außen liegend die durchgehenden Schlaufenleiter 2223,2224 der zweiten Schlaufenspule 222 in einem Bereich 2227 ausschnittsweise dargestellt, welche die Schlaufenleiter 2213,2214, die Verbindungen 2215 und vor allem den Stoßbereich 2216 umfassen.

In Figur 4 sind ferner die Richtungen des Stromfluss I durch die Schlaufenleiter 2213,2214 und 2223,2224 in Form von Pfeilen dargestellt. Die sich durch diese Stromflüsse in der Raumrichtung z ergebenden magnetischen Flussdichten Bz sind in Form von kleinen Kreisen symbolisiert. Die Raumrichtungen x, y, z sind durch ein separates Achsenkreuz gekennzeichnet. Dabei kennzeichnet ein Punkt in einem derartigen Kreis einen aus der Blattebene herausragenden Vektor der magnetischen Flussdichte, während ein Kreuz in einem derartigen Kreis einen in die Blattebene hineinlaufenden Vektor. Auf Grund der erfindungsgemäßen Gestaltung der Koppelspule 22 tritt dabei im Stoßbereich 2216 der besondere Effekt auf, dass die Anzahl der aus der Blattebene herausragenden Vektoren größer ist als die in die Blattebene hineinlaufenden Vektoren. Es tritt also keine Auslöschung der magnetischen Flussdichten auf. Die durch Überlagerung der herausragenden und hineinlaufenden Vektoren resultierende Flussdichte kann von der Übertragungsspule 315 im Handgerät einer Schreib- und/oder Lesevorrichtung erfasst werden. Deren Erfassungsbereich ist im Beispiel der Figur 4 durch einen strichlierten Kreis gekennzeichnet und macht einen Datenaustausch auch dann möglich, wenn das Handgerät von einer Bedienperson durch Zufall unwissentlich gerade auf einen Stoßbereich 2216 gerichtet wird. Diese Eigenschaft wird mit der Erfindung dadurch erreicht, dass die zylindrischen Schlaufenspulen 221 und 222 räumlich so ineinander liegend angeordnet sind, dass deren Stoßbereiche sich nicht überlappen.

Figur 5 zeigt in durchgezogener Linie beispielhaft den Verlauf A der magnetischen Flussdichte Bz in dem in Figur 4 dargestellten Stoßbereich 2216 der Schlaufenspule 221, welche bei der erfindungsgemäßen Anordnung auf dem durchgängigen Bereich 2227 der Schlaufenspule 221 zu liegen kommt. Es ist zu erkennen, dass zwar eine Reduzierung des Wertes der magnetischen Flussdichte auftritt, aber keine Nullstelle. Eine solche Nullstelle ist als strichlierter Verlauf C ebenfalls in die Figur 4 eingezeichnet.

Figur 6 zeigt eine perspektivische Draufsicht auf eine beispielhafte Ausführung einer Schreib- und/oder Leseeinrichtung 3 für einen Datenmobilspeicher 2, welche entsprechend dem Blockschaltbild von Figur 3 ein Handgerät 31 und eine daran angeschlossene elektronische Programmiereinheit 32 aufweist. Das Handgerät 31 hat dabei ein mit einer Pistole vergleichbare Form. Es besteht im wesentlichen aus einem Griffstück 311 mit einem Auslöseschalter 312 und einer darauf angebrachten Steuereinrichtung 313. An deren Kopfende befindet sich ein Aufnahmekopf 314 mit einer integrierten Übertragungsspule 315. Eine elektronische Programmiereinheit 32 ist über ein Datenkoppelkabel 33 mit dem Griffstück 311 des Handgeräts 31 verbunden. Die elektronische Programmiereinheit 32 weist vorteilhaft z.B. zumindest eine Bedientastatur 321 und ein Anzeigedisplay 322 auf.

Mittels Figur 7 soll eine beispielhafte Anwendung eines Datenmobilspeichers gemäß der Erfindung am Beispiel eines flaschenförmigen Gefäßes erläutert werden. Figur 7 zeigt in einer perspektivischen Frontansicht beispielhaft eine Metallflasche 1, z.B. eine Gasflasche, welche mit einem erfindungsgemäßen Datenmobilspeicher 2 zur Erfassung und/oder Verarbeitung von bevorzugt gasflaschenspezifischen Daten ausgerüstet ist. Die Gasflasche weist dabei einen auf einem Flaschenfuß 111 ruhenden Flaschenkörper 11 auf. Der Flaschenkörper 11 geht über in ein Flaschenoberteil 12, welches aus einem Flaschenhals 121 mit einem aufgesetzten Flaschenkopf 122 besteht. Am Flaschenkopf 122 befindet sind eine bedienbares Absperrventil 125, womit die Metallflasche 1 geöffnet und geschlossen werden kann. Falls die Metallflasche 1 z.B. zur Aufnahme eines Gases eingesetzt wird, welches unter Druck steht, können z.B. in Figur 1 nicht dargestellte Schlauchleitungen an eine Anschlussbuchse 126 am Flaschenkopf 122 angeschlossen werden. Hierüber ist es dann möglich, ohne Verluste Gas unter Druck aus der Metallflasche 1 zu entnehmen oder in dieses einzufüllen. Aus Gründen der Sicherheit ist bei der in Figur 1 beispielhaft gezeigten Metallflasche 1 ein Schutztrichter 123 am Flaschenkopf 122 angebracht. Dieser umschließt das Absperrventil 125 und die Anschlussbuchse 126 und schützt diese vor mechanischen Beschädigungen. Schließlich weist der Schutztrichter 123 eine Eingriffsöffnung 124 auf, um insbesondere die Zugänglichkeit des Absperrventils 125 im Schutztrichter 123 zu ermöglichen.

Bevorzugt im Bereich des Flaschenhalses 121 ist ein berührungslos les- und/oder beschreibbarer Datenmobilspeicher 2 gemäß der Erfindung angebracht. Dabei sind in einem ringförmigen Trägergehäuse 21 eine Koppelantenne 22 und eine Datenverarbeitungseinheit mit integrierten Datenspeichermitteln 233 eingebettet. Eine solche Gestaltung und Anbringung des Datenmobilspeichers 2 wird durch die zylindrische Form der Schlaufenspulen und den sich dadurch ergebenden freien Raum 223 im Inneren ermöglicht, wie dies z.B. der Darstellung von Figur 3 entnehmbar ist.

Eine wie in Figur 7 gezeigte Anordnung kann gemeinsam mit einem Schreib- und/oder Lesegerät z.B. nach Figur 6 als ein induktives Identifikationssystem eingesetzt werden. Ein solches Identifikationssystem enthält in der Regel eine große Vielzahl von Datenmobilspeichern 2. Diese weisen jeweils eine Datenverarbeitungseinheit 23 mit integrierten Datenspeichermitteln 233 und eine Koppelspule 22 auf. Die Koppelspule ist im jeweiligen Datenmobilspeicher 2 mit der Datenverarbeitungseinheit 23 zur berührungslosen Übertragung und/oder zum berührungslosen Empfang von Daten verbunden.

Die Verwendung eines Datenmobilspeichers 2 in einem derartigen System kann bevorzugt zur Aufnahme von Daten dienen, die für eine Kennzeichnung von Gasflaschen 1 gemäß der Darstellung in Figur 7 erforderlich sind. Ferner kann ein Datenmobilspeicher 2 bei einem Identifikationssystem eingesetzt werden, womit zur Kennzeichnung von Gasflaschen 1 dienende Daten verfasst und/oder verarbeitet werden. Bei den Daten kann es sich um Kennzeichnungen der Flasche, z.B. Herstellungsdatum, Flaschenummer, Flaschentyp, um Kennzeichnungen des Flascheninhalts und um Kennzeichnungen des Einsatzes, z.B. Anzahl der Füllungen, Versandadresse, u.v.m. handeln.

Eine integrierte Datenverarbeitungseinheit mit angeschlossenen Datenspeichermitteln kann insbesondere für eine Ablage von empfangenen Daten in den Datenspeichermitteln bzw. für einen Abruf von Daten aus den Datenspeichermitteln sorgen, welche über die Koppelspule abgesendet werden sollen. Ferner kann die Datenverarbeitungseinheit eine Entschlüsselung empfangener bzw. eine Verschlüsselungen von abzusenden Daten vornehmen. Schließlich können empfangene bzw. abzusendende Daten von der Datenverarbeitungseinheit auch zum Zwecke der Redundanz bzw. der Erhöhung der Datenintegrität bearbeitet werden.

Die erfindungsgemäße Koppelspule und ein damit ausgerüsteter Datenmobilspeicher bietet den besonderen Vorteil, dass eine in einer Schreib- und/oder Leseeinrichtung integrierte Übertragungsspule 315 klein ausgeführt werden kann. Dadurch wird die Handhabung eines z.B. in Form einer Handgeräts ausgeführten Schreib- und/oder Leseeinrichtung erheblich erleichtert. Diese Erleichterung ist besonders dann von Vorteil, wenn die Datenmobilspeicher verteilt angeordnet und nicht leicht zugänglich sind. Sind z.B. Gasflaschen entsprechend dem Beispiel in der Figur 7 mit jeweils einem erfindungsgemäßen Datenmobilspeicher ausgerüstet, und mehrere Gasflaschen z.B. in einer Metallpalette kippsicher angeordnet, so sind insbesondere die Datenmobilspeicher an den in der Mitte einen derartigen Packung platzierten Gasflaschen von außen nur schwer zugänglich. In einem solchen Fall ist die erfindungsgemäße Gestaltung der Datenmobilspeicher von besonderem Vorteil, da auf Grund der Erfindung ein Datenaustausch nahezu uneingeschränkt von allen Raumrichtungen aus möglich ist.

## Patentansprüche

1. Ringförmiger mobiler Datenspeicher (2), welcher eine Datenverarbeitungseinheit (23) mit integrierten Datenspeichermitteln (233) und eine Koppelspule (22) mit einer langgestreckten Schlaufenspule aufweist, deren Schlaufenenden sich auf einer zylindrischen Mantelfläche gegenüberliegen und sich nicht überlappen,
**gekennzeichnet durch** die Koppelspule (22) mit zumindest zwei in Reihe geschalteten Schlaufenspulen (221;222), deren je zwei Schlaufenenden (221; 222) räumlich so ineinanderliegend angeordnet sind, dass die jeweiligen gegenüberliegenden Schlaufenenden einer Schlaufenspule (221;222) auf dem Umfang der zylindrischen Mantelfläche nicht übereinanderliegen.

2. Ringförmiger mobiler Datenspeicher (2) nach Anspruch 1, wobei die mindestens zwei langgestreckten Schlaufenspulen (221; 222) räumlich so ineinanderliegend angeordnet sind, dass die jeweiligen gegenüberliegenden Schlaufenenden gleichmäßig auf dem Umfang der zylindrischen Mantelfläche verteilt sind.

3. Ringförmiger mobiler Datenspeicher (2) nach Anspruch 1 oder 2, wobei die Datenverarbeitungseinheit (23) mit den integrierten Datenspeichermitteln (233) auf dem Umfang der zylindrischen Schlaufenspulen (221; 222) angeordnet ist.

4. Ringförmiger mobiler Datenspeicher (2) nach einem der vorangegangenen Ansprüche, wobei der mobile Datenspeicher (2) eine geschlossene, nichtlösbare Einheit ausbildet.

5. Identifikationssystem, mit mindestens
a) einem ringförmigen mobilen Datenspeicher (2) nach einem der vorangegangenen Ansprüche, und
b) einer Schreib- und/oder Leseeinrichtung (3), die zumindest eine integrierte Übertragungsspule (315) aufweist, worüber Daten mit der Koppelspule (22) eines ringförmigen mobilen Datenspeichers (2) berührungslos ausgetauscht werden können.

6. Verwendung eines ringförmigen mobilen Datenspeichers (2) nach einem der vorangegangenen Ansprüche zur Aufnahme von Daten, die für eine Kennzeichnung von Gasflaschen (1) dienen.

## Claims

1. Annular mobile data storage device (2), having a data processing unit (23) with integrated data storage means (233) and a coupling coil (22) with a long loop coil, the loop ends of which face each other on a cylindrical lateral surface, and do not overlap, **characterised by** the coupling coil (22) having at least two series-connected loop coils (221;222), the two loop ends (221;222) of each of which are arranged spatially within one another such that the respective opposing loop ends of a loop coil (221;222) do not lie one on top of the other on the periphery of the cylindrical lateral surface.

2. Annular mobile data storage device (2) according to Claim 1, whereby the at least two long loop coils (221;222) are arranged spatially within one another such that the respective opposing loop ends are evenly distributed on the periphery of the cylindrical lateral surface.

3. Annular mobile data storage device (2) according to Claim 1 or 2, whereby the data processing unit (23) is arranged with the integrated data storage means (233) on the periphery of the cylindrical loop coils (221;222).

4. Annular mobile data storage device (2) according to one of the preceding Claims, whereby the mobile data storage device (2) forms a closed, non-detachable unit.

5. Identification system, having at least
a) an annular mobile data storage device (2) according to one of the preceding Claims, and
b) a writing device and/or a reading device (3) having at least one integrated transmission coil (315), by means of which data can be exchanged with the coupling coil (22) of an annular mobile data storage device (2) in a contactless manner.

6. Use of an annular mobile data storage device (2) according to one of the preceding Claims, for recording data, which serves to identify gas cylinders (1).

## Revendications

1. Mémoire (2) mobile de données de forme annulaire, qui a une unité (23) informatique ayant des moyens (233) intégrés de mémorisation de données et une bobine (22) de couplage avec une bobine à boucle s'étendant en longueur, dont les extrémités de boude sont opposées sur une surface latérale cylindrique et ne se chevauchent pas,
**caractérisée par** la bobine (22) de couplage ayant au moins deux bobines (221; 222) en boucle montées en série dont respectivement deux extrémités (221; 222) de boucle sont disposées dans l'espace à emboîtement de sorte que les extrémités respectives opposées de boucle d'une bobine (221; 222) à boucle ne soient pas superposées sur le pourtour de la surface latérale cylindrique.

2. Mémoire (2) mobile de données de forme annulaire suivant la revendication 1, dans laquelle les au moins deux bobines (221; 222) à boude s'étendant en longueur sont emboîtées dans l'espace l'une dans l'autre de façon à ce que les extrémités de boucle opposées respectivement soient réparties de manière uniforme sur le pourtour de la surface latérale cylindrique.

3. Mémoire (2) mobile de données de forme annulaire suivant la revendication 1, dans laquelle l'unité (23) informatique ayant les moyens (233) intégrés de mémorisation de données est disposée sur le pourtour des bobines (221; 222) à boucle cylindrique.

4. Mémoire (2) mobile de données de forme annulaire suivant l'une des revendications précédentes, dans lesquelles la mémoire (2) mobile de données constitue une unité fermée indétachable.

5. Système d'identification comprenant au moins
a) une mémoire (2) mobile de données de forme annulaire suivant l'une des revendications précédentes, et
b) un dispositif (3) d'écriture et/ou de lecture qui a au moins une bobine (315) intégrée de transmission grâce, à laquelle des données peuvent être échangées sans contact avec la bobine (22) de couplage d'une mémoire (2) mobile de données de forme annulaire.

6. Utilisation d'une mémoire (2) mobile de données de forme annulaire suivant l'une des revendications précédentes pour la réception de données qui servent à une caractérisation de bouteilles (1) de gaz.
